# EUROPEAN PATENT APPLICATION

(11) **EP 1 820 393 A2**
(43) Date of publication of application: **22.08.2007**
(21) Application number: 07102596.9
(22) Date of filing: 16.02.2007
(51) Int. Cl.: A01J 9/02, A01J 11/06

(54) **Process for filtering milk and washing machine for filters used in said process**

(30) Priority: 16.02.2006 IT BO20060116; 11.04.2006 IT BO20060266
(71) Applicant: Chiesa, Claudio, 40054 Budrio BO (IT)
(72) Inventor: Chiesa, Claudio, 40054 Budrio BO (IT)
(74) Representative: Lanzoni, Luciano

(57) **Abstract**

A process for filtering milk comprises a step of filtering raw milk, that is to say milk substantially just obtained from milking, using at least one filter (10) which can be washed and has a degree of filtration which is between 2.1 µm and 1 mm.

## Description

The present invention relates to a process for filtering milk, and in particular a process for filtering milk just obtained from milking, and a washing machine for washing filters used in said process.

During the operating path which identifies the cycle for collection of raw milk, a step of filtering the milk just obtained from milking is required.

The milk, even if obtained in a sterile way from healthy individuals, contains various micro-organisms, blood and udder cells.

The micro-organisms in milk normally comprise yeasts, moulds and occasionally viruses (in small quantities, therefore without practical importance). In contrast, amongst the micro-organisms present bacteria are of great practical importance, in particular lactic, enteric, propionic, butyric and proteolytic bacteria.

The microbial load of milk is strictly dependent on the hygienic conditions of the environment in which milking takes place and, for some pathogenic germs, on the state of health of the animals.

At milking, the milk has a bactericidal activity, due to the presence of lactenins, although this activity stops after several hours.

Then, the multiplication of the lactic flora occurs in logarithmic progression, if the milk is not stored at a low temperature (around 4°C).

To prevent an excessive proliferation of the flora in the milk, always harmful, the milk is usually filtered and refrigerated.

At present filtration is performed by passing the milk through a layer of cotton wool or paper and its main aim is to remove rough material which accidentally got into the milk, such as hairs, fragments of excrement, food residues.

Refrigeration at 4°C for the period between one milking and the next allows the milk which arrives at the dairy to be improved in bacteriological terms and without a significant increase in acidity.

At present, prior art filtering processes, for milk in particular and in the foodstuffs sector in general, are mainly carried out with disposable paper filters or bag filters (in some cases cotton wool filters are also used) whilst filters made of fabric which do not guarantee the absence of the release of particles or, worse, bacteria, are not recommended and are prohibited in many regulations.

The paper filters and bag filters normally used have many disadvantages.

Paper filters have limits due to their poor capacity for guaranteeing that they will capture polluting elements and the possibility of breaking during the filtering step.

Paper filters are difficult to identify and with the passage of time struggle to maintain the original capacity and degree of filtration.

Paper filters and bag filters cause problems in the management of the materials captured (waste) which must be systematically disposed of in accordance with suitable procedures after each filtering cycle, since the filters are normally disposable.

More specifically, disposable filters for foodstuffs clog very often, in particular those with very reduced porosity, and are inexpensive and highly perishable (for example paper sieves or filters in the oil filtering sector) and therefore are thrown away after each use.

Multi-use filters, which also clog very often (for example sieves or filters made of polypropylene in the oil filtering sector), are better quality and with practically zero perishability. These are washed by hand or by immersing them in washing tanks.

There are also filters which do not clog and although not perishable and although made of good quality material, when necessary they are washed by hand or thrown away, due to the very limited washing frequency.

Known filters for foodstuffs are therefore not subject to specific automations during washing.

Known washing machines comprise, for example, immersed drum or centrifugal washing machines.

The system of washing by immersing in static or centrifugal washing machines (mainly used in the case of multi-use recyclable filters used in processes with frequent clogging) has a plurality of disadvantages.

The washing water must be heated abundantly and the required temperature maintained for the entire immersion time.

The washing water must be mixed with abundant doses of detergents.

The duration of the washing must be particularly long and in general such procedures are expensive.

In this context, the main aim of the present invention is to propose a process for filtering milk which is free of the above-mentioned disadvantages.

One aim of the present invention is to propose a filtering process which guarantees uniformity of the filtering features with the passage of time.

Another aim of the present invention is to propose a filtering process which is versatile and allows simplification of the waste management process.

Another aim of the present invention is to propose a filtering process which is totally neutral relative to the product processed consequently with zero polluting effects (no particle release).

The present invention also relates to a washing machine for washing filters, in particular filters used in the process for filtering milk in accordance with the present invention.

In particular, the washing machine is designed for washing recyclable filters for foodstuffs.

The machine in question allows flow and against the flow method washing of filters for foodstuffs (for example polypropylene cartridge filters) for filtering liquid foodstuffs (water, wine, oils, etc.) .

Therefore, the washing machine will be part of a filtering cycle and will operate during the step of restoring the filter hygienic/operating conditions.

The technical purpose indicated and the aims specified are substantially achieved by a process for filtering milk and a washing machine comprising the technical features described in the independent claims and in one or more of the dependent claims.

Further features and advantages of the present invention are more apparent in the description below, with reference to a preferred, nonlimiting, embodiment of a washing machine and a process for filtering milk, illustrated in the accompanying drawings, in which:
- Figure 1 is a schematic view of a milking system in which a filtering process in accordance with the present invention may be implemented;
- Figure 2 is a diagram of a first embodiment of a washing machine in accordance with the present invention;
- Figure 3 is a diagram of a second embodiment of a washing machine in accordance with the present invention.

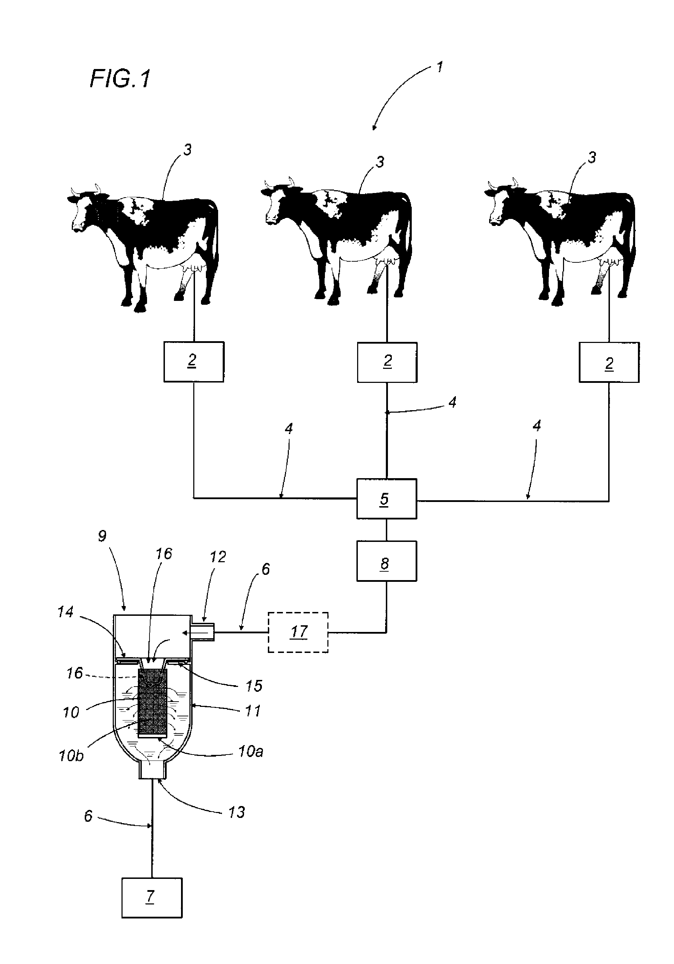

With reference to the accompanying drawings and in particular with reference to Figure 1, the numeral 1 denotes a milking system.

The system 1 is not described in detail, since it is not part of the present invention.

Schematically, the system 1 comprises a plurality of milking devices, each schematically illustrated with a block 2, which can be applied to the udders of corresponding cows 3.

From each milking device 2 there extends a respective pipe 4 for conveying the milk just obtained from milking.

The milk flows from the pipes 4, usually gravity fed, into a collection manifold or vessel 5 from which it then arrives, through a pipe 6, in a refrigerating chamber 7 for preserving and storing the milk.

Between the manifold 5 and the refrigerating chamber 7 the milking system 1 comprises a feed pump 8 and a device 9 for filtering the milk, both positioned along the pipe 6.

The pump 8 is usually installed in the collection vessel 5 and is activated automatically when the milk exceeds a predetermined level in the vessel 5 then stops when the milk falls below a corresponding stop level.

For the sake of simplicity, reference is to made a single filtering device 9, although the system 1 may comprises any number of filters 9 depending on requirements.

The filtering device 9 comprises at least one filter element or filter 10 for filtering the milk.

The filter 10 is preferably of the cartridge type and has a sealed base wall 10a and a lateral wall 10b defined by filtering screens, not illustrated in detail, through which the milk passes for filtering. The device 9, of the substantially known type and described only as far as required to allow an understanding of this text, comprises a container 11, inserted along the pipe 6, having an opening 12 forming an inlet for the milk just obtained from milking and an opening 13 forming an outlet for the filtered milk.

Inside the container 11 there is a supporting element 14 for the filter 10.

The element 14 is supported in a sealed way by a respective contact element 15 located inside the container 9.

The supporting element 14 has a funnel-shaped central portion 16 through which the milk goes into the filter 10.

The milk flows into the filter 10 which fills up and applies the filtering action by means of the lateral wall 10b through which the milk goes to the container 11 outlet 13.

The filtering process disclosed is characterised in that it can be used at any stage in the life of the milk (before, during and after any treatment) including that of filtering raw milk during the milking cycle directly by the producer.

The filtering system uses filter elements or filters 10 with definite and clearly identified porosity rating (degree of filtration).

The filters 10 have a rating, that is to say, porosity within a range from 2.1 µm to 1 mm.

The filters 10 are positioned in the filtering device 9 and are of the type which can be washed.

The filters 10 guarantee uniformity of filtering features with the passage of time, the possibility of selecting different porosities depending on the results required by the producer and total washability (and consequent long life with unchanged rating features) consequently simplifying the waste management process.

The filtering system, using filters suitable for use with foodstuffs, is also totally neutral relative to the product processed, consequently with zero polluting effects, that is to say, no particle release in the milk.

The filtering system uses foodstuff filters 10 (filters which may be made of any material provided that it is suitable for use with foodstuffs, for example polypropylene filters 10), whose degree of filtration is between 2.1 µm and 1 mm.

In other words, the milk filtering system is characterised in that it uses filters with a degree of filtration identified as a rating; and in that it is a milk filtering system which allows definite identification (and therefore selection) of the degree of porosity (degree of filtration) of the filtering.

The milk filtering system is characterised in that it conditions the quality of the raw milk without applying any treatment to it, the function of the system remaining only that of filtering, in particular in accordance with the provisions for example of Italian law, since filtering is not considered a milk treatment process.

The milk filtering system is characterised in that it normalises, deliberately keeps under control or consciously reaches a precise numeric objective for the quantity of somatic cells coming out of the filter, operating exclusively on the choice of porosity, or degree of filtration, without treating or micro-filtering the milk.

It should be noticed that micro-filtering, for example according to Italian law, means using filters with a degree of filtration which is less than or equal to 2 µm. Filtering with such a type of filter is prohibited for milk because these porosity values substantially modify all of the components of the milk.

The milk filtering system allows automatic detection of critical situations of particular pollutant excesses, interrupting the flow of milk filtered if there are excessive quantities of impurities without causing breakages in the filter or loss of filtering capacity, always keeping the organoleptic properties of the milk unchanged.

In practice, the filter clogs but does not break nor does it allow the passage of elements larger than those indicated on the rating plate.

The process for filtering milk disclosed therefore comprises the step of filtering the raw milk, just obtained from milking, using the filter elements 10 which advantageously can be washed and have a porosity of between 2.1 µm and 1 mm.

As already indicated, the filters 10 are of the cartridge type and are not described in detail, since they are not part of the present invention.

The preferred porosity value is between 10 µm and 20 µm for optimum filtering of somatic cells as well as any other impurities which may be present in the milk just obtained from milking.

A good selection of somatic cells is obtained with a cartridge filter having a porosity of 10 µm.

The most suitable milk temperature for this selection is between 35° and 40° Centigrade.

It should be noticed that, to allow the passage of fat particles present in the milk through the filters, the milk should preferably be filtered at the milking temperature.

At said temperature the fat particles deform, without breaking, so that they can pass through the filter element pores.

It is therefore important that the filters 10 are inserted in the milking system before the refrigerating chamber, that is to say, it is important to filter the milk in the filters 10 before refrigerating it.

In this way, the fat particles can pass without blocking the filter, thus allowing the filter to work on the somatic cells.

Experiments have shown that a filter element 10 with a predetermined rating is able to filter between forty and sixty quintals of milk at the milking temperature, dropping to one or two with cold milk since the filter cartridge clogs with fat particles and needs washing or substituting.

It is important to emphasise that the quantity of somatic cells present in the milk is considered, in many legal systems, as discriminating for distinguishing milk which can be put on sale from milk which must be disposed of in another way. From this viewpoint careful selection and filtering of somatic cells takes on significant importance.

It should be noticed that in this way the filtering step becomes simple filtration, that is to say, simply, it is carried out by making the milk pass through the filter 10 in order to purify it.

The process disclosed preferably comprises the step of filtering out the roughest impurities, such as mud and sawdust, which may be present in milk before filtering out the somatic cells or in any event micrometric impurities so as to avoid too much filter 10 clogging.

With regard to this, Figure 1 shows a second filtering device 17, not described in detail, illustrated with a dashed line and inserted along the pipe 6, characterised in that its porosity is greater than that of the filtering device 9.

When the step of filtering out the somatic cells is complete, or in general once the milk just obtained from milking has passed through the filters or at the end of milking, the filtering process in accordance with the present invention comprises the step of washing the filters 10, intended in particular for filtering somatic cells, so that they can be used again.

In practice, the process disclosed comprises a step of restoring the hygienic/operating conditions of the filter used.

It should be noticed that the porosity of the filters 10 is preferably around ten microns and, at the end of milking, they are mostly clogged with substances such as somatic cells.

The filter 10 washing step comprises at least one step of washing the filter 10 with a washing liquid which can move through the filter 10 in a direction V1 opposite to that of the milk in the corresponding filtering step.

Said step is otherwise known as the "against the flow" washing step.

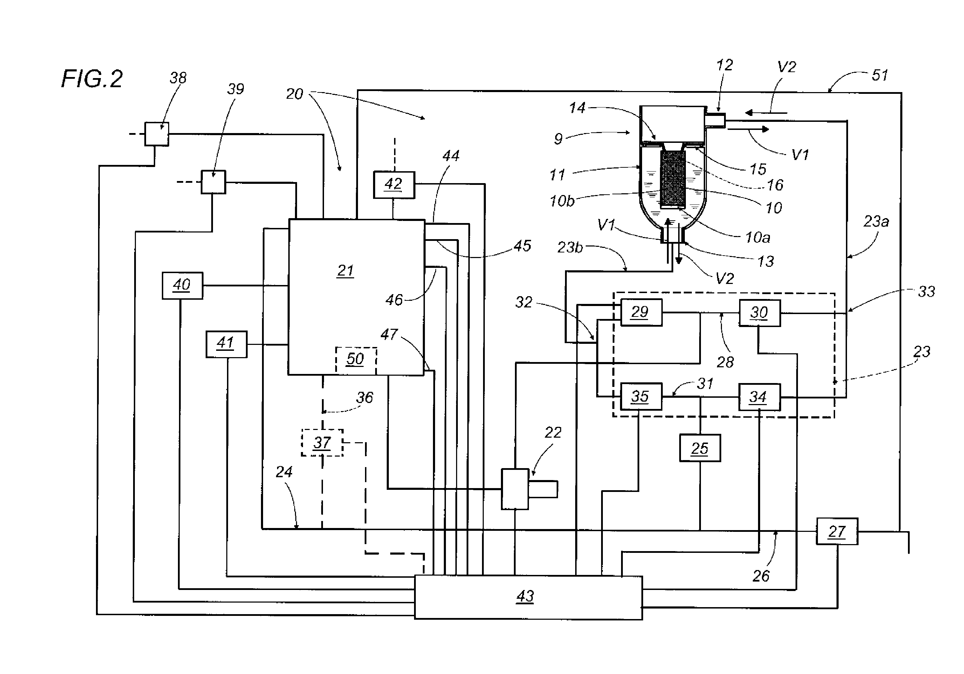

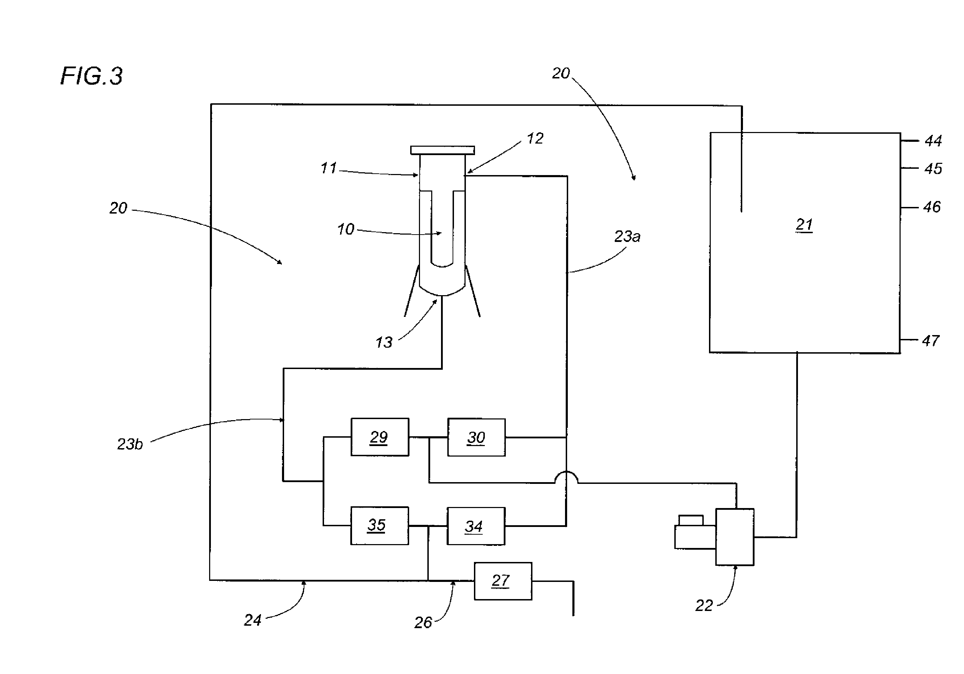

With reference to Figures 2 and 3, the container 9 together with the respective filter 10 is connected to a washing machine 20 in accordance with the present invention, described below.

Advantageously, in other embodiments, the milking system 1 comprises a first container 9 for the filter whilst the washing machine 20 is stably connected to a second container. In this case an operator removes the filter 10 from the first container at the end of filtering and places it in the second for washing.

During the against the flow washing step, the washing liquid is made to flow into the container 11 through the opening 13.

The liquid fills the container 11 and passes through the lateral wall 10b of the filter 10 reaching the container 11 opening 12 through the funnel-shaped portion 16.

It should be noticed that during this washing step the process in accordance with the present invention involves the creation in the filter 10 of a pressure which opposes the passage of the washing liquid so that for the duration of the against the flow washing it applies a uniform pressure on the lateral wall 10b.

This measure is necessary because, when the washing liquid frees part of the pores of the filtering screen if it does not find any further counterpressure it always flows through the first pores freed without cleaning the others.

The filter 10 washing step preferably comprises at least one filter 10 washing step carried out by making a washing liquid pass through the filter 10 in a direction V2 which is the same as that of the milk in the corresponding filtering step.

Said step is otherwise known as the "with the flow" washing step.

The filter 10 washing step preferably comprises a plurality of "against the flow" washing steps alternating with corresponding "with the flow" washing steps to form a washing cycle.

An example of a washing cycle comprises a first against the flow washing step called the prewash, at the end of which he washing liquid, in particular water, is discharged.

The washing cycle then comprises a series of with the flow and against the flow washing steps with a washing liquid, preferably water and detergent, which is reused in each step in the series.

The series preferably begins with an against the flow washing step and ends with a with the flow washing step.

Finally, the example washing cycle comprises an against the flow washing step for rinsing, at the end of which the washing liquid is discharged.

Advantageously, the washing machine 20 in accordance with the present invention, schematically illustrated in Figures 2 and 3 is used to wash the filter 10.

The machine 20 comprises a washing liquid supply tank 21 and a pump 22 for feeding the washing liquid to the filter 10.

Advantageously, in accordance with the present invention, the filter 10 is washed while it is kept inside the container 11 in which it is located during milking.

At the end of milking the container 11 is put in fluid communication with the machine 20 for filter 10 cleaning.

A hydraulic circuit 23 for defining or regulating the direction of feed of the washing liquid is present between the pump 22 and the container 11 for implementing the with the flow and against the flow washes.

The circuit 23 can be connected by a pipe 23a to the container 11 opening 12 at the opening 12 and by a pipe 23b to the container 11 opening 13.

The machine 20 also comprises a washing liquid return pipe 24 from the hydraulic regulating circuit 23 to the tank 21.

As illustrated in Figure 2, along the return pipe 24 there is an overpressure device 25 for defining a counterpressure in the return pipe 24.

Said device 25 preferably comprises a valve with calibrated holes for generating, in the container 11, a counterpressure with a value of between around 0.5 bar and around 1 bar.

Advantageously the counterpressure value is between around 0.6 bar and around 0.7 bar.

Downstream of the device 25, the return pipe 24 has a discharge branching section 26 intercepted by a corresponding discharge valve 27.

Examining the regulating circuit 23 in detail, it can be seen that it has a first branch 28 along which a first valve 29 and a second valve 30 are located.

An intermediate portion of the branch 28 between the valves 29 and 30 is in fluid communication with the pump 22.

A second branch 31 is connected parallel with the first branch 28 and shares a first node 32 and a second node 33 with the first branch.

The pipe 23b is connected to the circuit 23 at the node 32 whilst the pipe 23a is connected to the circuit 23 at the node 33.

A third valve 34 and a fourth valve 35 are positioned along the branch 31.

The return pipe 24 is in fluid communication with an intermediate portion of the branch 31, between the valves 34 and 35.

Advantageously, the washing machine 20 comprises a tank 21 discharge pipe 36.

The pipe 36 is positioned between the tank 21 and the return pipe 24 and is intercepted by a corresponding discharge valve 37.

The valves 29, 30, 34 and 35 are preferably pneumatic and the valves 27 and 37 are electric.

The valves 29 and 30 are normally closed.

The valves 34 and 35 are normally open.

The valve 27 is normally open.

The valve 37 is normally closed.

In practice, adjusting the supply times of the valves 27, 29, 30, 34, 35 and of the pump 22 defines the machine 20 washing cycles and their duration according to requirements.

A first operating configuration of the hydraulic circuit 23 for defining or regulating the direction of feed of the washing liquid for the filter element 10 against the flow washing steps is achieved by supplying the valve 29 and valve 35, whilst the washing liquid is circulated by the pump 22.

A second operating configuration of the hydraulic circuit 23 for defining or regulating the direction of feed of the washing liquid for the filter element 10 with the flow washing steps is achieved by supplying the valves 30 and 34.

With reference to Figure 2, it should be noticed that the machine 1 comprises a valve 38, preferably electric, for feeding cold water to the tank 21.

The machine 1 comprises a valve 39, preferably electric, which feeds hot water to the tank 21.

In other words, the machine 1 comprises the valves 38 and 39 to allow its connection to corresponding water pipes. Therefore, the machine 1 can be supplied with water at two different temperatures, one higher and the other lower, so that by mixing them it is possible to obtain water at the optimum operating temperatures.

The valves 38 and 39 are preferably normally closed.

Advantageously, the machine 1 also comprises a peristaltic pump 40 for feeding the tank 21 with detergent to be mixed with the water.

The machine 1 comprises a second peristaltic pump 41 for feeding the tank 21 with acidic substances, normally used to sanitise food treatment systems, to be mixed with the water as required.

The machine 1 preferably comprises means 50 for heating the washing liquid, for example heating elements, positioned in the tank 21.

This is necessary for those installations in which the tank 21, and therefore the machine 20, cannot be supplied with hot water, the washing liquid in general consisting of water and detergent or water and acidic substances suitable for washing the filters 10.

Washing with hot water is appropriate because the best detergent results in the particular case of filters 10 used for filtering raw milk are achieved with washing liquid having a temperature of between 40° Centigrade and 70° Centigrade.

A preferred operating temperature is around 60° Centigrade.

In the preferred embodiment illustrated, the machine 1 comprises a valve 42, preferably electric, for tank 21 washing. The valve 42 is preferably supplied with hot water and is opened at the end of the prewash or washing with detergent with the tank 21 empty so that it rinses and cleans the tank.

It should be noticed that the tank 21 washing water is discharged through the valve 37, the pipe 24 and the branching section 26.

A computerised control unit schematically illustrated with a block 43 is in communication with the pumps 22, 40 and 41 and with the valves 27, 29, 30, 34, 35, 37, 38, 39 and 42 to supervise machine 1 operation.

Advantageously, the machine 1 also comprises a plurality of level sensors 44, 45, 46 and 47 connected to the tank 21 and in communication with the computerised unit 43.

A first sensor 44 indicates when the maximum level of fluid in the tank 21 has been reached and, through the unit 43, requires the tank 21 to be emptied.

In particular, the sensor 44 generates an alarm whilst emptying is activated manually with the machine 20 stopped.

In practice, for emptying, an operator supplies the valve 37 using a suitable control device not illustrated.

A second sensor 45 indicates the optimum filling level of the washing liquid tank 21 at least in the prewash and rinse steps.

A third sensor 46 indicates the optimum filling level of the washing liquid tank 21 in the washing with recirculation step.

A fourth sensor 47 indicates the minimum level of liquid in the tank 21 according to which the control unit 43 requires the pump 22 to stop.

There is an "overflow" discharge pipe 51 for discharging from the tank 21 if the washing liquid exceeds all of the levels without activation of the corresponding emergency devices.

Operation may be summarised as follows.

The machine uses the booster pump which draws the detergent liquid from the tank (according to predetermined times and levels) and delivers it to the container holding the filter to be washed first in one direction then in the opposite direction, V1 and V2, repeating the cycle pushing in both of the opposite directions according to times and durations which can be set.

The washing cycles may be extended in time, alternated or in any event generated according to requirements and the expected cleaning results, by suitably controlling the valves and pumps present in the machine 1.

Examining the example washing cycle in more detail, during the prewash step the circuit 23 is in the first operating configuration.

The valves 38 and 39 are used to fill the tank 21 with water at the preferred temperature of around 40°C - 50°C obtained by mixing water at a higher temperature with water at a lower temperature.

Once the water in the tank 21 reaches the sensor 45, the pump 22 is activated, draws the washing liquid from the tank 21 and delivers it to the container 11, which it enters through the opening 13, filling the container.

It should be noticed that the washing liquid which has entered the container 11 begins to free the filter 10 pores and starts to flow out of the container 11 through the opening 12.

During this prewash step, the washing liquid is preferably disposed of through the valve 27 and the branching section 26 of the pipe 24.

The pressure in the pipe 23a, which in this case is a discharge pipe, is regulated by the device 25 and therefore the pressure in the filter 10 remains constant, allowing the liquid to clean the entire filter evenly.

At the end of the prewash the machine 20 stops then it begins the series of against the flow and with the flow washing steps with water and detergent.

Said series preferably starts with an against the flow washing step and ends with a with the flow washing step.

With the circuit 23 in the first operating configuration, the tank 21 is filled with hot water at around 60° and detergent by means of the valve 39 and the pump 41.

When the sensor 46 is reached, the pump is activated and begins the series of alternate with the flow and against the flow washing steps.

At the end of the against the flow washing step, suitably timed, there is a with the flow washing step, stopping the supply of valves 29 and 35 to supply valves 30 and 34.

The washing liquid, preferably clean, flows through the pipe 23a into the container 11, washing the filter 10 and flowing out through the pipe 23b.

The valve 27 is preferably supplied so that the washing liquid returns to the tank 21 through the pipe 24, thus recycling the washing liquid.

At the end of this series and precisely of the final with the flow washing step, the washing liquid, water and detergent is discharged and the machine stops.

Finally, the cycle involves the rinsing step, performed in the same way as the prewash step described above.

The invention described brings important advantages.

The filtering process using washable cartridge filters guarantees lasting filtering capacity for large milk flows, a constantly high filtering capacity with the rating porosity, a significant capacity for retaining polluting elements filtered out, very easy washing which guarantees a long, effective life.

The new filtering system disclosed is applied mainly to this step of the production cycle and it aims to allow the producer to use a new, more technologically advanced and therefore more precise system than the conventional systems, with benefits in terms of the possibility of selecting the filter porosity, simple, good quality filter washing and a consequent high number of filtering cycles without changes in the physical and organic properties and the performance of the system.

The invention described has evident industrial applications and may be modified and adapted in several ways without thereby departing from the scope of the inventive concept. Moreover, all details of the invention may be substituted by technically equivalent elements.

## Claims

1. A process for filtering milk, **characterised in that** it comprises a step of filtering raw milk, that is to say milk substantially just obtained from milking, using at least one filter (10) which can be washed and has a degree of filtration which is between 2.1 µm and 1 mm.

2. The process according to claim 1, **characterised in that** the filter (10) has a degree of filtration which is between around 10 µm and around 20 µm.

3. The process according to claim 2, **characterised in that** the filter (10) has a degree of filtration which is around 10 µm.

4. The process according to any of the claims from 1 to 3, **characterised in that** the filter (10) is a cartridge filter.

5. The process according to any of the claims from 1 to 4, **characterised in that** it comprises a step of washing the filter (10) substantially to restore the rating plate conditions and performance, that is to say, the functionality of the filter (10).

6. The process according to claim 5, **characterised in that** the washing step comprises at least one filter (10) washing step using a washing liquid which can move through the filter (10) in a direction (V1) opposite to that in which the milk travels during the filtering step.

7. The process according to claim 6, **characterised in that** it comprises a step of defining a pressure opposing the feeding of the washing liquid which can move through the filter (10) in said direction (V1) opposite to that in which the milk travels during the filtering step, thus keeping the pressure applied by the washing liquid on the filter (10) substantially uniform.

8. The process according to any of the claims from 5 to 7, **characterised in that** the washing step comprises at least one filter (10) washing step using a washing liquid which can move through the filter (10) in a direction (V2) which is the same as that in which the milk travels during the filtering step.

9. The process according to any of the claims from 5 to 8, **characterised in that** the washing step takes place using a washing liquid having a temperature of between around 40° Centigrade and around 70° Centigrade.

10. The process according to claim 9, **characterised in that** the temperature of the washing liquid is around 60° Centigrade.

11. The process according to any of the claims from 5 to 10, **characterised in that** the washing step comprises a plurality of filter (10) washing steps using a washing liquid which can move through the filter (10) in a direction (V1) opposite to that in which the milk travels during the filtering step and a plurality of filter (10) washing steps using a washing liquid which can move through the filter (10) in a direction (V2) which is the same as that in which the milk travels during the filtering step.

12. The process according to claim 11, **characterised in that** each of the washing steps using a washing liquid which can move through the filter (10) in the direction (V1) opposite to that in which the milk travels alternates with a corresponding washing step using a washing liquid which can move through the filter (10) in the direction (V2) which is the same as that in which the milk travels.

13. A washing machine in particular for washing cartridge filters (10), said filters (10) being housed in a container (11) having at least a first, inlet opening (12) for the liquid to be filtered and a second, outlet opening (13) for the filtered liquid, the machine being **characterised in that** it comprises a first hydraulic connection pipe (23a) for connection to the container (11) at the first opening (12), a second hydraulic connection pipe (23b) for connection to the container (11) at the second opening (13), a pump (22) for feeding a washing liquid to the filter (10) through the first and second pipes (23a, 23b) through the first and second openings (12, 13), a hydraulic circuit (23) for selecting the direction of feed of the washing fluid in the container, the selection circuit (23) being positioned between the pump (22) and the first and second pipes (23a, 23b), the selection circuit (23) allowing, in a first operating configuration, delivery of the washing liquid to the container (11) through the first pipe (23a) and the return of the washing liquid through the second pipe (23b) and in a second operating configuration delivery of the washing liquid to the container (11) through the second pipe (23b) and the return of the washing liquid through the first pipe (23a).

14. The machine according to claim 13, **characterised in that** it comprises an overpressure device (25) for defining a counterpressure which opposes the washing liquid returning from the container (11).

15. The machine according to claim 13 or 14, **characterised in that** it comprises a washing liquid feed tank (21), the pump (22) being in fluid communication with the tank (21).

16. The machine according to claim 15, **characterised in that** it comprises a pipe (24) for recirculating the washing liquid positioned between the selection circuit (23) and the tank (21).

17. The machine according to any of the claims from 13 to 16, **characterised in that** the selection circuit (23) comprises a plurality of valves (29, 30, 34, 35) which can be operated to define said first configuration and said second configuration.
